# FASCICULE DE BREVET EUROPEEN

(11) **EP 1 210 986 B1**
(45) Date de publication et mention de la délivrance du brevet: **14.01.2009**
(21) Numéro de dépôt: 01402817.9
(22) Date de dépôt: 30.10.2001
(51) Int. Cl.: B06B 3/00

(54) **Outillage de vibration de grandes dimensions, notamment pour des applications de soudage**
Vibrationsapparat von grosser Dimension, vor allem für Schweissanwendungen
Vibration device of big dimensions especially useful for welding

(30) Priorité: 28.11.2000 FR 0015345
(43) Date de publication de la demande: 05.06.2002
(73) Titulaire: Forward Technology Industries, 74105 Annemasse Cédex (FR)
(72) Inventeur: Janin, Jean-Louis, 74250 Fillinges (FR); Berthet, Jean-Louis, 74140 Chens/Leman (FR)
(74) Mandataire: Peaucelle, Chantal

(56) Documents cités:
- FR-A- 1 073 308
- FR-A- 2 743 929
- US-A- 3 544 073
- US-A- 4 582 239

## Description

La présente invention est relative à un outillage de vibration à une fréquence comprise entre 10 kHz et 100 kHz, notamment pour des applications de soudage, d'assemblage ou de découpe de matériaux tels que par exemple des matériaux à base de thermoplastiques, de nettoyage ou d'émulsification par activation d'un milieu liquide, d'atomisation gazeuse ou encore de grenaillage par projection de médias de toute nature.

Cette invention vise plus particulièrement un outillage de vibration de grandes dimensions, à fréquence ultrasonore plus communément appelé sonotrode. Le problème technique devant être résolu par la présente invention étant celui d'obtenir des surfaces de travail de dimensions considérées jusqu'à présent comme impossibles à obtenir par la mise en oeuvre des sonotrodes actuellement disponibles sur le marché.

A l'heure actuelle, lorsque l'Homme de l'art désire réaliser une sonotrode en vue d'obtenir une surface de révolution telle qu'un disque au niveau de la zone de travail, il lui est impossible de concevoir une sonotrode circulaire ayant un diamètre supérieur à 120 mm, avec comme condition une valeur d'amplitude constante en tout point de cette surface de travail. En effet, les vibrations obtenues lors du fonctionnement d'une telle sonotrode sont liées aux contraintes internes ainsi qu'à l'apparition de modes propres de vibration annexes à une excitation longitudinale, et cela de façon totalement dépendante de l'accroissement des dimensions de la sonotrode.

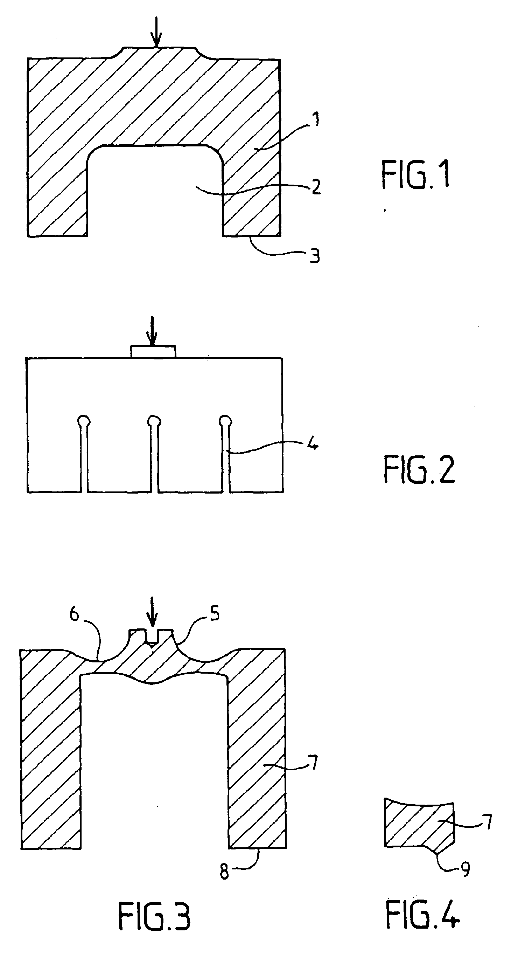

A l'heure actuelle, l'unique moyen permettant d'envisager une sonotrode circulaire de grand diamètre, c'est-à-dire pouvant aller jusqu'à 300 mm ou plus, consiste à réaliser une sonotrode creuse dont un exemple de réalisation a été représenté de façon schématique sur la figure 1 des dessins annexés. Comme on le voit sur cette figure, cette sonotrode circulaire est usinée en son centre, sur un diamètre d'au moins deux fois l'épaisseur de la paroi 1 ainsi formée. On obtient ainsi un creux 2 dont la profondeur est limitée pour des raisons d'amplification et de transmission de mouvement au noeud de vibration longitudinale correspondant au centre de la longueur de la sonotrode. On notera que la longueur de la sonotrode ainsi réalisée est égale à une demi-longueur d'onde, elle-même liée à la fréquence de vibration souhaitée et à la célérité du son dans le matériau utilisé pour usiner cette sonotrode.

Ainsi qu'on le voit sur la figure 1, on obtient une sonotrode présentant approximativement la forme d'une cloche et la fréquence utilisée reste une vibration axiale et non radiale. Cette vibration demeure à la limite de l'utilisable car l'amplitude de déformation de la surface de travail 3 est très loin d'être constante puisqu'elle varie du simple au double entre les points situés sur la circonférence du diamètre intérieur et celle du diamètre extérieur délimitant cette surface de travail. Une telle sonotrode n'autorise donc qu'un travail sur une couronne circulaire de très, très faible épaisseur.

Par ailleurs, en raison de cette déplorable répartition d'amplitude et du fait de la proximité de nombreux modes annexes nuisibles à la pureté de la vibration longitudinale souhaitée, ce type de sonotrode est fragile et reste limité à des amplitudes de travail extrêmement faibles, de l'ordre de 30 µ crête à crête pour un élément vibrant à 20 kHz. Ces caractéristiques sont incompatibles avec l'évolution des diverses applications actuelles et futures : les besoins exigeant généralement des amplitudes de travail de l'ordre de 50 µ à 100 µ pour une fréquence de 20 kHz.

Afin de tenter de résoudre ce problème, on a envisagé un certain nombre d'artifices de réalisations parmi lesquels on peut citer notamment la mise en oeuvre de fentes longitudinales, débouchantes ou non, telles qu'illustrées en 4 sur la sonotrode représentée de façon schématique sur la figure 2 des dessins annexés. Une telle solution permet d'éliminer les déformations parasites liées aux modes propres annexes sur des sonotrodes de grandes dimensions, mais elle n'apporte aucun résultat en ce qui concerne la qualité de déformation recherchée sur la surface de travail.

EP-A-0 313 425 fait par ailleurs connaître une sonotrode de révolution utilisant le principe d'excitation d'une couronne accordée à une fréquence définie sur une résonance dite radiale, à partir d'un excitateur de forme tubulaire résonant sur cette même fréquence selon un mode longitudinal pur. Le mouvement longitudinal de l'excitateur est alors transformé en mouvement transversal perpendiculaire à l'axe de révolution de la sonotrode. L'inconvénient de cette solution connue réside dans le fait que l'utilisation de la transformation du mouvement de l'excitateur reste particulière et qu'elle n'autorise pas notamment une transmission de la vibration suivant un ou plusieurs axes parallèles.

Partant de cet état de la technique, la présente invention s'est fixé pour objectif de réaliser une gamme de sonotrodes de grandes dimensions, autorisant des surfaces de travail jusqu'alors considérées comme impossibles.

En conséquence, cette invention concerne un outillage de vibration, de grandes dimensions, à fréquence ultrasonore, notamment pour des applications de soudage, d'assemblage ou de découpe de matériaux, notamment thermoplastiques, de nettoyage ou d'émulsification par activation d'un milieu liquide, d'atomisation gazeuse ou de grenaillage par projection de médias de toute nature, réalisé sous la forme d'une sonotrode circulaire, creusée en son centre de façon à réaliser une cavité permettant d'obtenir une forme approchée d'une cloche,
caractérisé en ce qu'il comprend :
- une masse de liaison assurant le couplage de surface avec un élément d'excitation en vibration ;
- au moins une membrane circulaire de transmission excitée en vibration en son centre ou à une extrémité et
- au moins un élément final, de forme tubulaire, dont l'extrémité définit la surface de travail de la sonotrode, lié à la masse de liaison par ladite membrane, celle-ci transmettant la vibration audit élément final dont la longueur est définie par un mode de vibration longitudinal en accord avec ladite fréquence d'excitation,
et en ce que la membrane assure un rôle de ressort entre la masse de liaison et l'élément final.

D'autres caractéristiques et avantages de la présente invention ressortiront de la description faite ci-après, en référence aux dessins annexés qui en illustrent des exemples de réalisation dépourvus de tout caractère limitatif. Sur les dessins :
- les figures 1 et 2 illustrent de façon schématique des exemples de réalisation de sonotrodes cloches selon l'état antérieur de la technique et discutés ci-dessus, la figure 1 étant une coupe par un plan vertical.
- la figure 3 est une vue schématique, similaire à la figure 1, représentant un exemple de réalisation d'une sonotrode de grandes dimensions selon la présente invention.
- la figure 4 est une vue schématique partielle représentant une variante de la surface de travail d'une sonotrode selon l'invention.
- les figures 5 et 6 sont également des vues schématiques illustrant les déformées en vibration d'une sonotrode cloche selon la présente invention et
- la figure 7 est une vue en plan représentant une variante de réalisation de l'élément final d'une sonotrode selon la présente invention.

On se réfère en premier lieu à la figure 3, sur laquelle on voit que la sonotrode selon la présente invention comporte : une masse de liaison 5 assurant le couplage de surface avec un élément d'excitation en vibration non représenté sur la figure, mais schématisé par une flèche ; au moins une membrane circulaire 6 de transmission excitée en vibration en son centre ou à une extrémité et au moins un élément final 7, de forme tubulaire dont l'extrémité 8 définit la surface de travail de la sonotrode. L'élément final 7 est lié à la masse de liaison 5 par la membrane 6 de façon que celle-ci transmette la vibration à cet élément final 7 dont la longueur est définie par un mode de vibration longitudinale en accord avec la fréquence d'excitation.

La masse de liaison 5 peut être réalisée sous des formes diverses, telles que notamment, et à titre d'exemples non limitatifs, de forme cubique ou cylindrique, de manière à assurer le couplage avec l'élément d'excitation en vibration, par exemple un émetteur, un « booster » ou une rallonge quelconque, cet élément, non représenté sur le dessin, étant un composant acoustique d'un outillage classique de système à ultrasons. Ce couplage peut être effectué par tout moyen classique, par exemple à l'aide d'un organe de vissage intégré ou rapporté tel qu'un goujon ou une vis.

La masse de liaison 5 ne subit aucune dilation-compression liée à un mode propre de vibration, mais elle subit en masse, dans l'espace, le mouvement infligé par la vibration de sa surface qui est couplée avec l'élément d'exicitation en vibration. Ce mouvement n'est possible, sans détérioration de la liaison que pour une rigidité propre et définie de la ou des membranes 6. En effet, ces membranes assurent un rôle de ressort de liaison entre la masse 5 et l'élément final 7 de la sonotrode. L'invention prévoit donc d'ajuster la raideur de la membrane 6 par sa forme et par son épaisseur, en fonction des masses en mouvement afin d'obtenir la déformation souhaitée sur un mode propre de vibration accordé sur la fréquence d'excitation.

L'élément final 7 de forme tubulaire reprend des formes d'outillage ultrasons classiques sauf, qu'avec le nouveau type de transmission de la vibration, selon la présente invention il devient possible de réaliser des sonotrodes de grandes dimensions par le fait d'une excitation multipoints, par secteurs de surface ou sur la surface complète de la zone en opposition à la zone de travail. Cet élément final 7 présente donc une longueur égale à un multiple de demi-longueur d'onde à la fréquence d'excitation considérée.

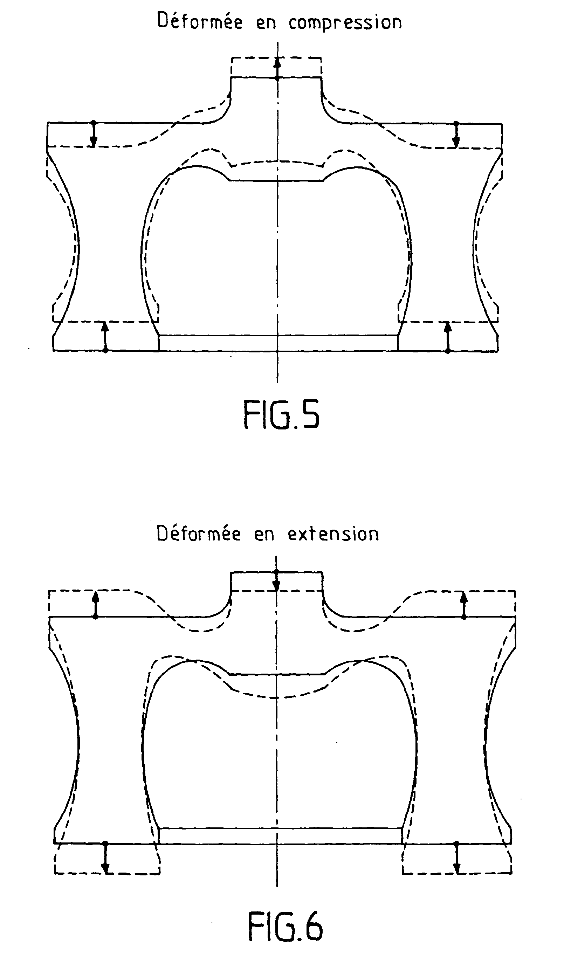

Sur les figures 5 et 6, on a représenté respectivement la déformée en compression et la déformée en extension d'une sonotrode cloche selon la présente invention, sous l'effet de la vibration d'excitation.

On a donné ci-après les caractéristiques d'une sonotrode réalisée selon la présente invention. Il ne s'agit que d'un mode de réalisation préféré, dépourvu de tout caractère limitatif.

Cette sonotrode circulaire présente un diamètre extérieur de 150 à 300 mm pour un fonctionnement sous une fréquence de 20 kHz. Elle est réalisée à partir d'une masse de liaison 5 présentant un diamètre de 40 mm et une hauteur de 40 mm, d'une membrane circulaire 6 sans discontinuité, d'épaisseur de l'ordre de 25 mm avec des rayons de raccordement de l'ordre de 25 mm à chacune des extrémités liées à la masse de liaison 5 ou à l'élément final 7, ce dernier se présentant sous la forme d'un tube cylindrique, de section circulaire, de diamètre 150 à 300 mm et d'épaisseur de paroi pouvant aller jusqu'à 70 mm.

Une telle sonotrode permet d'obtenir des surfaces de travail très importantes avec des contraintes maximales internes ne dépassant pas 100 N x mm² pour une amplitude de vibration de 60µ crête/crête.

On notera que l'élément final tubulaire 7 ainsi formé ayant une vibration sur un mode longitudinal pur, toutes les connaissances actuelles de formes d'outillage ultrasonores lui sont applicables. En effet, la demi-section de cet élément final tubulaire peut suivre les lois établies sur les sections de sonotrodes de plus faibles dimensions.

L'amplitude et la longueur de l'élément final tubulaire peuvent être augmentées ou diminuées en utilisant les principes connus de variation de la largeur de section en fonction des zones caractéristiques d'un point de vue vibratoire de la longueur.

Selon la présente invention, l'élément final tubulaire cylindrique 7 peut être prolongé en multiples de demi-longueurs d'onde ou par adjonction d'autres sonotrodes, ce qui permet de réaliser des sonotrodes dites composées augmentant ainsi l'amplitude, par focalisation, sur un ensemble de points ou sur une ou plusieurs lignes, voire même une surface complexe. Pour des applications particulières, l'élément final 7 peut être utilisé sur ses deux surfaces extrêmes de travail.

Les adjonctions d'autres sonotrodes prolongeant l'élément final 7 peuvent être réalisées par tout moyen de liaison classique, par exemple à l'aide de goujons, notamment de goujons accordés en fréquence comme décrit dans FR-A-2 541 159.

La surface de travail 8 de l'élément final 7 peut être conçue de façon à pouvoir être utilisée soit sur sa totalité, soit sur une partie seulement de celle-ci. Il est également possible, en cas de nécessité de profils complexes afin de diminuer l'impédance ramenée par la charge que représente le contact sonotrode/pièce, de réaliser une forme de surface de travail telle que par exemple une lèvre, un patin, un bossage, un lamage ou tout autre relief positif ou négatif, sans aucune restriction dans l'espace, directement sur la ou les surfaces extrêmes de travail 8 de l'élément final cylindrique 7. Ainsi, la figure 4 des dessins annexés illustre un exemple de réalisation dans lequel la surface de travail de l'élément final 7 se présente sous la forme d'une denture circulaire 9. Il ne s'agit bien entendu que d'un exemple de réalisation.

La forme de la section de la membrane 6 étant directement liée au diamètre intérieur de la masse de liaison, il en résulte qu'il est possible de réaliser un élément final 7 tubulaire, à profil non plus cylindrique, mais complexe, par exemple à base de carré, de rectangle, de triangle, de losange, d'ovale ou autres.

Lorsque la membrane 6 présente une forme complexe, par exemple une section variable, elle peut être partagée en plusieurs membranes de transmission en prévoyant des ouvertures judicieusement placées en fonction des liaisons. A titre d'exemples, il est possible de réaliser un élément final 7 tubulaire à profil carré, avec quatre membranes attribuées respectivement à chacun des quatre côtés et représentant une forme d'étoile à quatre branches, à partir de la masse de liaison centrale 5. La longueur des branches représentées par les membranes sera donc variable, deux à deux dans le cas d'un profil rectangulaire.

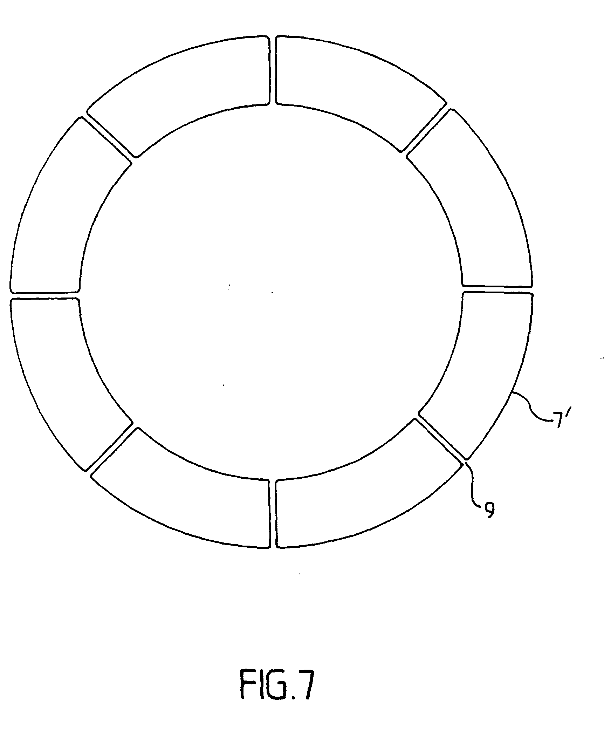

De même, dans la mesure où il serait nécessaire de concevoir un élément final 7 de forme particulièrement complexe, on peut prévoir de découper celui-ci, de façon totale ou partielle, à l'aide de fentes débouchantes ou non. Ces fentes peuvent être de largeur variable, à axes parallèles ou non, d'axes rectilignes ou non. Sur la figure 7 des dessins annexés, on a représenté en plan un exemple de réalisation non limitatif d'un élément final 7' découpé à l'aide de fentes 9. La réalisation de telles fentes peut nécessiter, pour des problèmes de répartition d'amplitude de vibration sur la zone de travail ainsi que pour l'éloignement de fréquences proches néfastes au bon fonctionnement de la sonotrode, des variations de largeur, des variations de longueur ou des variations de positionnement relatives entre elles.

## Revendications

1. Outillage de vibration, de grandes dimensions, à fréquence ultrasonore, notamment pour des applications de soudage, d'assemblage ou de découpe de matériaux, notamment thermoplastiques, de nettoyage ou d'émulsification par activation d'un milieu liquide, d'atomisation gazeuse ou de grenaillage par projection de médias de toute nature, réalisé sous la forme d'une sonotrode circulaire, creusée en son centre de façon à réaliser une cavité permettant d'obtenir une forme approchée d'une cloche,
**caractérisé en ce qu'**il comprend :
- une masse de liaison (5) assurant le couplage de surface avec un élément d'excitation en vibration ;
- au moins une membrane circulaire de transmission (6) excitée en vibration en son centre ou à une extrémité et
- au moins un élément final (7), de forme tubulaire, dont l'extrémité définit la surface de travail (8) de la sonotrode, lié à la masse de liaison (5) par ladite membrane (6), celle-ci transmettant la vibration audit élément final dont la longueur est définie par un mode de vibration longitudinal en accord avec ladite fréquence d'excitation,
et **en ce que** la membrane (6) assure un rôle de ressort entre la masse de liaison (5) et l'élément final (7).

2. Outillage selon la revendication 1, **caractérisé en ce que** l'on choisit sa forme et sa raideur en fonction des masses en mouvement pour obtenir la déformation souhaitée sur un mode propre de vibration accordé sur la fréquence d'excitation.

3. Outillage selon la revendication 1, **caractérisé en ce que** la masse de liaison (5) est de forme cubique ou cylindrique.

4. Outillage selon la revendication 1, **caractérisé en ce que** le ou les éléments finaux (7) ont une longueur égale à un multiple de demi-longueurs d'onde à la fréquence d'excitation considérée.

5. Outillage selon la revendication 1, °**caractérisé en ce que** l'élément final (7) peut être prolongé en multiples de demi-longueurs d'onde.

6. Outillage selon la revendication 1, **caractérisé en ce que** l'élément final (7) est prolongé par adjonction d'autres sonotrodes, ces dernières étant fixées par des goujons de liaison classiques ou accordés en fréquence.

7. Outillage selon la revendication 1, **caractérisé en ce que** la surface extrême de travail (8) de l'élément final (7) présente une forme en relief, positif ou négatif, telle qu'une lèvre, un patin, un bossage, un lamage.

8. Outillage selon la revendication 1, **caractérisé en ce que** l'élément final (7) présente une forme tubulaire cylindrique.

9. Outillage selon la revendication 1, **caractérisé en ce que** l'élément final (7) présente un profil complexe, notamment à base de carré, de rectangle, de triangle, de losange, d'ovale.

10. Outillage selon la revendication 1, **caractérisé en ce que** l'élément final (7') est découpé, partiellement ou totalement, à l'aide de fentes (9) débouchantes ou non.

11. Outillage selon la revendication 1, **caractérisé en ce que** la membrane (6) peut être partagée en plusieurs membranes de transmission à l'aide d'ouvertures placées en fonction des liaisons.

## Claims

1. Large vibration tool, vibrating at ultrasonic frequency, especially for applications in the welding, joining or cutting of materials, especially thermoplastics, in cleaning or emulsifying by the activation of a liquid medium, in gas spraying or in shot blasting by blasting any kind of medium, made in the form of a circular sonotrode hollowed out at its centre so as to produce a cavity allowing a shape approaching that of a bell to be obtained,
**characterized in that** it comprises :
- a linking mass (5) providing surface coupling with a vibrational excitation element;
- at least one circular membrane (6) vibrationally excited at its centre or at one end; and
- at least one tube-shaped final element (7), the end of which defines the working area (8) of the sonotrode, linked to the linking mass (5) via the said membrane (6), the latter transmitting the vibration to the said final element whose length is defined by a longitudinal vibration mode tuned to the said excitation frequency, and that the membrane (6) acts as a spring between the linking mass (5) and the final element (7).

2. Tool according to Claim 1, **characterized in that** its shape and its stiffness are chosen according to the moving masses in order to obtain the desired deformation in a vibration eigenmode tuned to the excitation frequency.

3. Tool according to Claim 1, **characterized in that** the linking mass (5) is of cubic shape or cylindrical shape.

4. Tool according to Claim 1, **characterized in that** the final element(s) (7) has (have) a length equal to a multiple of half the wavelength at the excitation frequency in question.

5. Tool according to Claim 1, **characterized in that** final element (7) may be extended by multiples of a half-wavelength.

6. Tool according to Claim 1, **characterized in that** the final element (7) is extended by adding other sonotrodes, the latter being fastened by conventional connecting bolts or frequency-tuned.

7. Tool according to Claim 1, **characterized in that** the extreme working area (8) of the final element (7) has a shape with a positive or negative relief, such as a lip, a skid, a projection or a counterbore.

8. Tool according to Claim 1, **characterized in that** the final element (7) has a cylindrical tube shape.

9. Tool according to Claim 1, **characterized in that** the final element (7) has a complex profile, especially one based on a square, rectangle, triangle, diamond or oval.

10. Tool according to Claim 1, **characterised in that** the final element (7) is cut, at least partly, into emergent or non-emergent slots (9).

11. Tool according to Claim 1, **characterized in that** the membrane (6) may be divided into several transmission membranes into apertures placed depending on the linkages.

## Patentansprüche

1. Großformatiges Ultraschall-Vibrationsarbeitsgerät insbesondere zur Anwendung beim Schweißen, Zusammenfügen oder Zuschneiden von Materialien, insbesondere von Thermoplasten, beim Reinigen oder Emulsifizieren durch Aktivieren eines flüssigen Mediums, bei der Gaszerstäubung oder dem Strahlen durch Spritzen von Medien jeder Art, ausgebildet als kreisförmige Sonotrode, die in ihrer Mitte derart ausgehöhlt ist, dass ein Hohlraum gebildet ist, der es ermöglicht, annähernd eine Glockenform zu erhalten,
**dadurch gekennzeichnet, dass** es aufweist
- eine Verbindungsmasse (5), welche die Flächenkopplung mit einem Vibrationserregungselement gewährleistet;
- mindestens eine kreisförmige Übertragungsmembran (6), die in ihrer Mitte oder an einem Ende zu Vibrationen angeregt ist, und
- mindestens ein rohrförmiges Endelement (7), dessen Ende die Arbeitsfläche (8) der Sonotrode bildet, wobei das Element mit der Verbindungsmasse (5) durch die Membran (6) verbunden ist, welche die Vibration auf das Endelement überträgt, dessen Länge durch einen der Erregungsfrequenz entsprechenden Längsschwingungsmodus definiert ist,
- und dass die Membran (6) die Rolle einer Feder zwischen der Verbindungsmasse (5) und dem Endelement (7) ausübt.

2. Arbeitsgerät nach Anspruch 1, **dadurch gekennzeichnet, dass** seine Form und seine Steifigkeit in Abhängigkeit von den sich bewegenden Massen gewählt ist, um die gewünschte Verformung bei einem auf die Erregungsfrequenz abgestimmten Eigenschwingungsmodus zu erhalten.

3. Arbeitsgerät nach Anspruch 1, **dadurch gekennzeichnet, dass** die Verbindungsmasse (5) kubisch oder zylindrisch ausgebildet ist.

4. Arbeitsgerät nach Anspruch 1, **dadurch gekennzeichnet, dass** das oder die Endelemente (7) eine Länge aufweisen, die gleich einem Vielfachen der Halbwellenlänge bei der betreffenden Erregungsfrequenz ist.

5. Arbeitsgerät nach Anspruch 1, **dadurch gekennzeichnet, dass** das Endelement (7) um Vielfache der Halbwellenlänge verlängerbar ist.

6. Arbeitsgerät nach Anspruch 1, **dadurch gekennzeichnet, dass** das Endelement (7) durch das Anfügen weiterer Sonotroden verlängert ist, welche durch herkömmliche oder auf die Frequenz abgestimmte Verbindungsbolzen befestigt sind.

7. Arbeitsgerät nach Anspruch 1, **dadurch gekennzeichnet, dass** die Endarbeitsfläche (8) des Endelements (7) positiv oder negativ reliefartig ausgebildet ist, beispielsweise als Lippe, Kufe, Bosse, Senke.

8. Arbeitsgerät nach Anspruch 1, **dadurch gekennzeichnet, dass** das Endelement (7) rohrzylindrisch ausgebildet ist.

9. Arbeitsgerät nach Anspruch 1, **dadurch gekennzeichnet, dass** das Endelement (7) ein komplexes Profil aufweist, insbesondere mit quadratischer, rechteckiger, dreieckiger, rautenförmiger oder ovaler Grundfläche.

10. Arbeitsgerät nach Anspruch 1, **dadurch gekennzeichnet, dass** das Endelement (7') teilweise oder vollständig mittels offenen oder nicht offenen Schlitzen (9) geteilt ist.

11. Arbeitsgerät nach Anspruch 1, **dadurch gekennzeichnet, dass** die Membran (6) mittels Öffnungen in mehrere Übertragungsmembranen unterteilt werden kann, welche in Abhängigkeit von den Verbindungen vorgesehen sind.
